# EUROPÄISCHE PATENTANMELDUNG

(11) **EP 2 287 980 A1**
(43) Veröffentlichungstag der Anmeldung: **23.02.2011**
(21) Anmeldenummer: 09010753.3
(22) Anmeldetag: 21.08.2009
(51) Int. Cl.: H01S 3/06, H01S 3/102

(54) **Durchstimmbare Laserlichtquelle auf Basis variabler optischer Pulsanregung und Verfahren zum Betreiben derselben**

(71) Anmelder: Karlsruher Institut für Technologie, 76131 Karlsruhe (DE)
(72) Erfinder: Woggon, Thomas, 76131 Karlsruhe (DE); Klinkhammer, Sönke, 76137 Karlsruhe (DE); Valouch, Sebastian, 76133 Karlsruhe (DE); Bach, Johannes, 76133 Karlsruhe (DE); Lemmer, Uli, 76228 Karlsruhe (DE)

(57) **Zusammenfassung**

Die vorliegende Erfindung betrifft eine durchstimmbare Laserlichtquelle mit Emissionswellenlängen im sichtbaren oder einem angrenzenden Spektralbereich, umfassend ein Lasersubstrat (1) mit mehr als einer Emissionswellenlänge, eine Antriebseinheit (2) und eine Pulslichtquelle (6) mit Pulsgeber, wobei das Lasersubstrat rotierbar gelagert ist, und der Antriebseinheit zunächst ein Trigger, danach eine Signalverzögerungseinheit (4) und schließlich der Pulsgeber der Pulslichtquelle nachgeschaltet sind.
Weiterhin betrifft die Erfindung Verfahren zum Betreiben einer durchstimmbaren Laserlichtquelle. Hierzu wird ein Lasersubstrat mit Hilfe einer Antriebseinheit in eine definierte, konstante Rotationsbewegung versetzt. Ein von der Antriebseinheit gespeister Trigger gibt pro Umlauf ein Signal (3) aus, das durch eine einstellbare elektronische Verzögerungseinheit verzögert wird. Das verzögerte Triggersignal (5) aktiviert einen Anregeimpuls (7) einer Pumplichtquelle (6), der auf eine Position auf dem Lasersubstrat trifft. Eine Änderung der Anregeposition bewirkt eine Änderung der Laserwellenlänge und kann durch Variation der Verzögerungszeit erzielt werden.

## Beschreibung

Durchstimmbare Laser finden ihre Anwendung zum Beispiel auf dem Gebiet der Optoelektronik und in der Spektroskopie. Insbesondere die Bereitstellung von kompakten, schmalbandigen Laserlichtquellen mit Emissionswellenlängen im sichtbaren Spektralbereich mit schneller Durchstimmbarkeit ist dabei von besonderem Interesse.

Diese Aufgabe wird derzeit hauptsächlich durch die nachfolgend genannten Ansätze gelöst; Farbstofflaser mit veränderbarem externen Resonator, Frequenzverdreifachung der Emission eines breitbandig, im Infrarot emittierenden Lasers oder Weißlichtgenerierung mit Femtosekundenlaserpulsen.

Farbstofflaser mit veränderbarem externen Resonator sind beispielsweise aus der US 3 959 739 und der US 4 028 636 bekannt. Diese Lasersysteme verwenden einen in einem Lösungsmittel gelösten Fluoreszenzfarbstoff als aktives Medium, welches optisch angeregt wird.

Aus der WO2004077142 ist eine Infrarotstrahlquelle bekannt, die durch eine Frequenzverdreifachung der Emission durchstimmbare Emissionen in einem bestimmten Wellenlängenbereich realisiert. Weiterhin ist aus dem Stand der Technik bekannt, dass sich durch eine Frequenzverdreifachung der Emission eines Erbium-Faserlasers eine durchstimmbare Laseremission zwischen 495 nm und 650 nm einstellen lässt. Die Freuqenzverdreifachung geschieht mit Hilfe eines optischen parametrischen Oszillators (OPO). Durch Verwendung von Ultrakurzpulslasersystemen wird die Thermische Belastung des OPO gemindert, jedoch erreichen die Ultrakurzpulslasersysteme aufgrund des Bandbreitenlimits prinzipbedingt nicht die Schmalbandigkeit von Farbstofflasersystemen. Darüber hinaus erfolgt die Wellenlängenselektion durch mechanisches Einstellen des Resonators.

Eine weitere, aus dem Stand der Technik bekannte Lösung beruht auf der Weißlichtgenerierung mit Femtosekundenlaserpulsen, wie in der WO 2005071483 offenbart. Neben dem Femtosekundenlaser benötigen diese Systeme auch eine spezielle nanostrukturierte Glasfaser zur Generierung des Weißlichtspektrums, weshalb sie mechanisch und optisch sehr aufwändig sind. Eine Selektion der Emissionswellenlänge ist bei diesen Systemen nur durch Herausfiltern der ungewünschten Spektralanteile möglich.

Alle genannten Lösungen beruhen auf der Änderung der Parameter des optischen Resonators. Da dies mit einer sehr hohen Genauigkeit erfolgen muss, sind diese Systeme sehr komplex und stellen hohe Anforderungen an die mechanische Stabilität. Insbesondere die schmalbandige Laseremission kann jedoch derzeit nur mittels Farbstofflaser realisiert werden.

Ausgehend davon liegt die **Aufgabe der Erfindung** darin, eine durchstimmbare Laserlichtquelle mit Emissionswellenlängen im sichtbaren oder einem angrenzendem Spektralbereich vorzuschlagen, die die aufgeführten Nachteile und Einschränkungen vermeidet. Insbesondere soll eine schnelle Durchstimmbarkeit von kompakten, schmalbandigen Laserlichtquellen ermöglicht werden. Weiterhin soll ein Verfahren zum Betreiben der durchstimmbaren Laserlichtquelle angegeben werde.

Diese Aufgabe wird im Hinblick auf die Vorrichtung durch die Merkmale des Anspruchs 1 und im Hinblick auf das Verfahren durch die Schritte des Anspruchs 7 gelöst. Die Unteransprüche beschreiben jeweils vorteilhafte Ausgestaltungen der Erfindung.

Zur Lösung der Aufgabe wird hinsichtlich der Vorrichtung eine durchstimmbare Laserlichtquelle auf der Basis zeitsynchronisierter variabler optischer Pulsanregung vorgeschlagen. Ein Grundgedanke der Erfindung ist eine Anordnung, die
- ein rotierbares Lasersubstrat mit Antriebseinheit
- einen Trigger
- eine elektronische Signalverzögerungseinheit und
- eine Pulslichtquelle aufweist.

Als rotierbar gelagertes Lasersubstrat wird in der Anordnung bevorzugt ein Substrat mit verteilter Rückkopplung, ein so genanntes Distributed Feedback Lasersubstrat (DFB-Substrat) verwendet. Derartige Substrate agieren sowohl als laseraktives Material als auch als Resonator.

In einer bevorzugten Ausführform verfügt das Substrat über Bereiche mit ortsabhängig variierenden Emissionswellenlängen die auf einer Kreisbahn angeordnet sind.

Die Rotation des Lasersubstrats wird durch eine Antriebseinheit realisiert. In einer bevorzugten Ausführform der Vorrichtung ist die Antriebseinheit ein Elektromotor und die Pulsslichtquelle ein Pumplaser.

Zur Durchführung des erfindungsgemäßen Verfahrens wird das Lasersubstrat gemäß Schritt a) von der Antriebseinheit in eine Rotation mit einer konstanten Frequenz versetzt. Der mit der Antriebseinheit verbundene Trigger erzeugt ein Drehzahlsignal, wie in Schritt b) angegeben. Dieses Signal wird gemäß Schritt c) von der Signalverzögerungseinheit elektronisch verzögert und wie in Schritt d) angegeben als Auslöser für einen Anregelichtpuls der Pulslichtquelle genutzt.

Bei einer Umdrehung wird somit ein Lichtpuls ausgesendet, der gemäß Schritt e) auf das Lasersubstrat gerichtet wird und jeweils auf dieselbe Position auf dem Lasersubstrat auftrifft. Hierdurch wird ein Licht mit einer definierten Wellenlänge emittiert. Die Position auf dem Lasersubstrat liegt auf einer Kreisbahn deren Radius vom Abstand der optischen Achse des Anregelichtes zur Rotationsachse des Lasersubstrats bestimmt ist. Die Position auf dieser Kreisbahn wird durch die Einstellung der Verzögerung gemäß Schritt f) an der Signalverzögerungseinheit bestimmt.

Ein besonderer Vorteil der Anordnung und des Verfahrens ist, dass die einzige Regelgröße die Drehzahl des Lasersubstrates ist. Dies lässt sich über den Einsatz bestehender Technik, insbesondere durch Elektromotoren mit geringem Aufwand realisieren.

Gleichzeitig kann auf den Einsatz von externern Resonatorspiegeln und komplexer Justagemechanik verzichtet werden, wodurch kompakte Systeme herstellbar sind.

Ein weiterer Vorteil des Verfahrens ist, dass die Anregung der Pumplichtimpulse auf einfache Weise, durch elektronische Anpassung der Verzögerungszeit realisierbar ist. Somit kann selektiv eine Position auf dem Lasersubstrat ausgewählt werden und mit der Rotationsfrequenz wiederholt angeregt werden. Die Geschwindigkeit zur Änderung der Anregeposition und damit der Wellenlänge ist primär von der Rotationsgeschwindigkeit des Lasersubstrats abhängig. Durch Segmentierung der Fläche des Lasersubstrates in identische Teilbereiche kann bei gegebener Rotationsgeschwindigkeit die Geschwindigkeit zur Änderung der Anregeposition um den jeweiligen Segmentierungsfaktor erhöht werden.

Eine Vorteilhafte Verwendung des erfindungsgemäßen Verfahrens ist die photospektrometrische Untersuchung von Probenmaterial. Das Lasersubstrat wird mit zeitlich synchronisierten Pulsfolgen angeregt, die fortlaufend innerhalb eines Umlaufes auf das Substrat gerichtet werden. Das Laserlicht wird nachfolgend auf das zu untersuchende Probenmaterial gerichtet, wobei es hierbei nur mit den für einen Nachweis charakteristischen Wellenlängen bestrahlt wird.

Eine weitere vorteilhafte Verwendung des Verfahrens stellt die optische Datenübertragung mittels Wellenlängen- und/oder Zeitmultiplexbetriebes dar. Hierzu wird die Verzögerungszeit in feste Intervalle eingeteilt und diese Intervalle werden einem binären Bitmuster zugeordnet. Das binäre Bitmuster definiert in welchem dieser Intervalle ein Pumppuls ausgesendet wird.

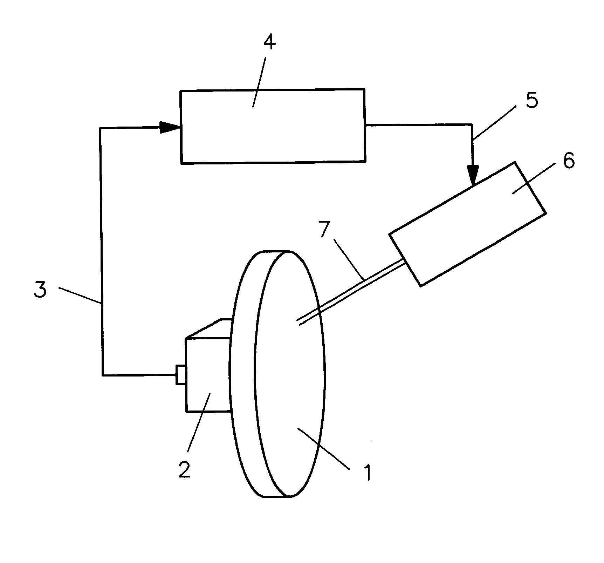

Die Erfindung wird mit einem Ausführungsbeispiel anhand der **Fig. 1** erläutert. Die **Fig. 1** zeigt schematisch den prinzipiellen Aufbau der Vorrichtung zur Durchführung des Verfahrens.

Das Lasersubstrat **1** wird mit Hilfe der Antriebseinheit **2** in eine definierte, konstante Rotation versetzt. Der in der **Fig. 1** nicht gezeigte Trigger in der Antriebseinheit **2** erzeugt bei jedem Umlauf ein Triggersignal **3,** das an die Signalverzögerungseinheit **4** weitergeleitet wird. Dort erfährt das Triggersignal **3** eine Verzögerung Δt, die einstellbar ist. Das verzögerte Triggersignal **5** wird zu der Pulslichtquelle **6** geleitet und aktiviert einen Anregepuls **7,** der auf das Lasersubstrat **1** trifft.

Abhängig von der Verzögerungszeit trifft pro Umlauf des Lasersubstrates **1** ein Anregepuls **7** auf jeweils dieselbe Position auf dem Lasersubstrat **1** und eine definierte Laserwellenlänge wird emittiert. Eine Änderung der Anregeposition und somit der Laserwellenlänge des DFB Lasers erfolgt durch Variation der Verzögerungszeit Δt.

### Bezugszeichenliste

- **1**: Lasersubstrat
- **2**: Antriebseinheit
- **3**: Triggersignal
- **4**: Signalverzögerungseinheit
- **5**: verzögertes Triggersignal
- **6**: Pulsichtquelle, Pumplaser
- **7**: Anregepuls

## Patentansprüche

1. Durchstimmbare Laserlichtquelle mit Emissionswellenlängen im sichtbaren oder einem angrenzenden Spektralbereich, umfassend ein Lasersubstrat mit mehr als einer Emissionswellenlänge, eine Antriebseinheit und eine Pulslichtquelle mit Pulsgeber, **dadurch gekennzeichnet, dass**
das Lasersubstrat rotierbar gelagert ist, und der Antriebseinheit zunächst ein Trigger, danach eine Signalverzögerungseinheit und schließlich der Pulsgeber der Pulslichtquelle nachgeschaltet sind.

2. Durchstimmbare Laserlichtquelle nach Anspruch 1, **dadurch gekennzeichnet, dass** das Lasersubstrat ein laseraktives Material und einen Resonator umfasst.

3. Durchstimmbare Laserlichtquelle nach Anspruch 1 oder 2, **dadurch gekennzeichnet, dass** auf dem Lasersubstrat Bereiche mit ortsabhängig variierenden Emissionswellenlängen angeordnet sind.

4. Durchstimmbare Laserlichtquelle nach Anspruch 3, **dadurch gekennzeichnet, dass** die Bereiche auf einer Kreisbahn um die Rotationsachse angeordnet sind.

5. Durchstimmbare Laserlichtquelle nach Anspruch 3 oder 4, **dadurch gekennzeichnet, dass** die Bereiche aus segmentierten Teilbereichen bestehen.

6. Durchstimmbare Laserlichtquelle nach Anspruch 1, **dadurch gekennzeichnet, dass** die Pulslichtquelle ein Pumplaser ist.

7. Verfahren zum Betreiben einer durchstimmbaren Laserlichtquelle nach einem der Ansprüche 1 bis 6 mit folgenden Verfahrensschritten:
a) Versetzen des Lasersubstrates in eine konstante, definierte Rotation;
b) Ausgabe eines Triggersignales von der Antriebseinheit;
c) Einstellen der Verzögerung des Triggersignales;
d) Aktivierung eines Anregepulses durch das verzögerte Triggersignal;
e) Richten des Anregepulses auf das Lasersubstrat;
f) Ändern der Wellenlänge durch Variation der Anregeposition auf dem Lasersubstrat durch Einstellung der Verzögerung des Triggersignals.

8. Verwendung einer durchstimmbaren Laserlichtquelle nach einem der Ansprüche 1 bis 6 zur photospektrometrischen Untersuchung einer Probe mit definierten Laserwellenlängen.

9. Verwendung einer durchstimmbaren Laserlichtquelle nach einem der Ansprüche 1 bis 6 zur Datenübertragung nach dem Wellenlängen-Multiplex-Verfahren.
